# EUROPEAN PATENT SPECIFICATION

(11) **EP 1 654 646 B1**
(45) Date of publication and mention of the grant of the patent: **28.02.2007**
(21) Application number: 04821627.9
(22) Date of filing: 16.06.2004
(51) Int. Cl.: G06F 9/46

(54) **A METHOD, APPARATUS AND COMPUTER PROGRAM FOR PROCESSING A QUEUE OF MESSAGES**
VERFAHREN, VORRICHTUNG UND COMPUTERPROGRAMM ZUM VERARBEITEN EINER WARTESCHLANGE VON NACHRICHTEN
PROCEDE, DISPOSITIF ET PROGRAMME INFORMATIQUE POUR LE TRAITEMENT D'UNE FILE D'ATTENTE DE MESSAGES

(30) Priority: 02.08.2003 GB 0318196
(43) Date of publication of application: 10.05.2006
(73) Proprietor: International Business Machines Corporation, Armonk, N.Y. 10504 (US)
(72) Inventor: TODD, Stephen, James, Hampshire SO23 9SR (GB)
(74) Representative: Watson, Justine Nicola C.
(86) International application number: PCT/EP2004/051126
(87) International publication number: WO 2005/085998

(56) References cited:
- WO-A-01/50275
- US-A- 5 305 389
- US-A- 6 092 154
- US-A1- 2002 002 658
- US-A1- 2003 126 116
- LO J L ET AL: "An analysis of database workload performance on simultaneous multithreaded processors" COMPUTER ARCHITECTURE, 1998. PROCEEDINGS. THE 25TH ANNUAL INTERNATIONAL SYMPOSIUM ON BARCELONA, SPAIN 27 JUNE-1 JULY 1998, LOS ALAMITOS, CA, USA,IEEE COMPUT. SOC, US, 27 June 1998 (1998-06-27), pages 39-50, XP010291385 ISBN: 0-8186-8491-7
- YAN SOLIHIN, JAEJIN LEE, JOSEP TORRELLAS: "Using a user-level memory thread for correlation prefetching" PROCEEDINGS OF THE 29TH ANNUAL INTERNATIONAL SYMPOSIUM ON COMPUTER ARCHITECTURE, 2002, pages 171-182, XP002301172 ANCHORAGE ALASKA

## Description

### Technical Field

The invention relates to data processing systems and more particularly to the processing of a queue of messages by such a system.

### Background Art

It is often necessary to 'replay' a sequence of actions into a database or other system (such as a messaging system).

The sequence may be represented at various levels, e.g. log replay (as used in recovery), transaction change replay (as used in database replication), or call replay (of an audit log of calls made, maybe at the SQL or stored procedure level or even at a higher application level).

Often, execution of the original actions was highly parallelised with database transaction and locking techniques assuring a logical order (sometimes only partial order). This parallelism was essential to achieve good system performance.

The logical order assured by the database transaction and locking techniques is represented in the sequence to be replayed. The problem is that the replay must be as fast as possible, and this also demands some degree of parallelism. However, it is still necessary to preserve the original logical sequence.

By way of example, consider a system where the sequence to be replayed is represented as a queue of work items. Each work item represents an original transaction, and contains a list of database record level updates to be made.

(The term update is used herein to include any operation that changes the database, including at least SQL INSERT, DELETE and UPDATE statements, and also any other updates such as data definition updates.)

The natural (much simplified) implementation of this is a single 'master transaction' thread:

// master transaction thread

for each work item // i.e. originating transaction

get (e.g. read) work item

for each record update in work item

apply update // e.g. record level update

end for each update

commit (work item read operation and database update operation)

end for each work item

However, each 'apply update' (which generally requires the relevant database record to be fetched (e.g. read) before the update can be applied) is likely to need data not currently held in a bufferpool associated with the database, so processing is stalled pending the retrieval of the required data. Thus a problem exists in that processing throughput can be severely impacted.

It will of course be appreciated that there is no corresponding problem with actually getting the update back onto the database disk since standard database lazy write techniques may be used.

Whilst this problem may apply to messaging systems it is less critical. As most queue activity is predictably at the ends of the queues, a bufferpool of messages to be read may be appropriately predictively prefetched. In other words, the queue is typically read in a FIFO order and thus can be predictively and sequentially prefetched.

It is much more difficult to make such predictions in database systems. This is because records sequentially read from a database are typically scattered all over the database disk and work for a database is unlikely to require sequentially (i.e. contiguously) stored data records.

US Patent 6092154 discloses a method of pre-caching data using thread lists in a multimedia environment. A list of data (read requests) which will be required is passed by a host application to a data storage device. In a multimedia environment the data required as a result of a read request can however be easily specified by the host application. In a database environment the host application may not be aware of the way in which the data is stored, or even if it is, the host application may not be able to communicate this appropriately to the data storage device. Thus it is possible that some of the data required by a subsequent operation will not be available.

US Patent 6449696 also discloses prefetching data from disk based on the content of lists with read requests.

### Disclosure of Invention

Accordingly the invention provides a method for processing a queue of messages, each message representing at least one request for an update to a database, the method comprising the steps of: browsing a message; extracting from a browsed message an update request; and sending a pretend update request to a database management system (DBMS) responsible for the database which is to be updated, the pretend update request comprising an indication which indicates that the DBMS should not execute the update but should prefetch data that will be required when a corresponding real update is requested.

Preferably the pretend update request is translated into a prefetch request; and required data is prefetched.

Preferably a real update request is subsequently initiated, the real update request using prefetched data in order to execute. Preferably the message comprising the update is destructively got from the queue. Preferably the destructive get is coordinated with the actual database update (two phase commit) so that a copy of the message is not deleted until confirmation of the update(s) has actually been received.

In one embodiment a master thread performs the step of initiating an update request and one or more read ahead thread perform the step of browsing a message.

Preferably the master thread is maintained at a predetermined processing amount behind a read ahead thread. This processing amount could be measured in terms of messages, updates etc. and helps to ensure that data exists in memory when required. If the master thread gets too close there is the danger that required data may not exist in memory when required for an update request to be executed. If on the other hand, the master thread falls too far behind, then there is the danger that memory will become full and result in data that has not yet been used having to be overwritten.

In one embodiment the prefetch request is in a predetermined form which is retained and an identifier is associated therewith in order that the retained predetermined form can be identified and used in subsequent performance of the real update request. Preferably the identifier is returned in response to the pretend update request.

In one embodiment the pretend update is translated into a prefetch request in a predetermined form and associated with an identifier by the DBMS. The identifier is received from the DBMS and is used in issuing a real update request.

Preferably responsive to using prefetched data for an update request, a memory manager is informed that the prefetched data used may be discarded from memory. This helps to avoid memory from becoming over full.

According to one aspect there is provided a method for pre-processing at a database management system (DBMS) update requests to database controlled by the DBMS, the method comprising: receiving an update request at the DBMS; receiving an indication at the DBMS indicating that the update request is a pretend update request and consequently that the DBMS should not execute the update but should prefetch data that will be required when a corresponding real update is requested; translating the pretend update request into a prefetch request; and prefetching required data based on the prefetch request.

Preferably a real update request is subsequently received and already prefetched data is used to execute the real update request.

In one embodiment the prefetch request is in a predetermined form and is retained. An identifier is then preferably associated with the retained predetermined form in order that the retained predetermined form can be identified and used in subsequent performance of the real update request. Preferably the identifier is returned in response to the pretend update request.

In one embodiment the identifier is received with a real update request and is used in performance of the real update request.

According to another aspect, there is provided an apparatus for processing a queue of messages, each message representing at least one request for an update to a database, the apparatus comprising: means for browsing a message; means for extracting from a browsed message an update request; and means for sending a pretend update request to a database management system (DBMS) responsible for the database which is to be updated, the pretend update request comprising an indication which indicates that the DBMS should not execute the update but should prefetch data that will be required when a corresponding real update is requested.

According to another aspect, there is provided an apparatus for pre-processing at a database management system (DBMS) update requests to database controlled by the DBMS, the apparatus comprising: means for receiving an update request at the DBMS; means for receiving an indication at the DBMS indicating that the update request is a pretend update request and consequently that the DBMS should not execute the update but should prefetch data that will be required when a corresponding real update is requested; means for translating the pretend update request into a prefetch request; and means for prefetching required data based on the prefetch request.

According to another aspect there is provided a computer program for processing a queue of messages, each message representing at least one request for an update to a database, the computer program comprising program code means adapted to perform, when executed on a computer, a method comprising the steps of: browsing a message; extracting from a browsed message an update request; and sending a pretend update request to a database management system (DBMS) responsible for the database which is to be updated, the pretend update request comprising an indication which indicates that the DBMS should not execute the update but should prefetch data that will be required when a corresponding real update is requested.

According to another aspect, there is provided a computer program for pre-processing at a database management system (DBMS) of update requests to database controlled by the DBMS, the computer program comprising program code means adapted to perform, when executed on a computer, the method steps of: receiving an update request at the DBMS; receiving an indication at the DBMS indicating that the update request is a pretend update request and consequently that the DBMS should not execute the update but should prefetch data that will be required when a corresponding real update is requested; translating the pretend update request into a prefetch request; and prefetching required data based on the prefetch request.

### Brief Description of the Drawings

Figure 1 shows a database system in accordance with the prior art;

Figure 2 illustrates the processing of the present invention in accordance with a preferred embodiment; and

Figure 3 further illustrates the processing of the present invention in accordance with a preferred embodiment.

### Mode for the Invention

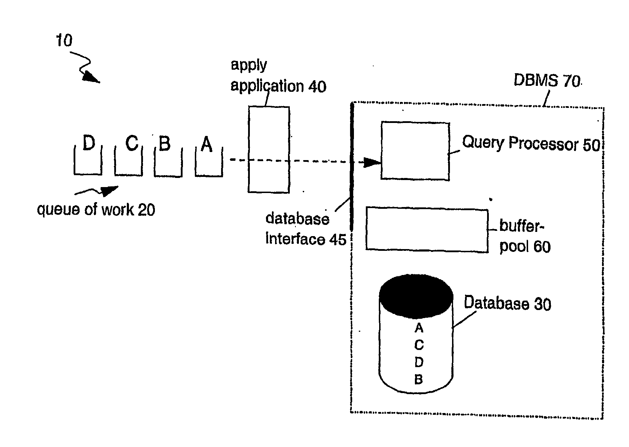

Figure 1 shows a database system in accordance with the prior art. A system 10 has a queue of work items (messages) 20 for processing. Each item of work represents at least one update to a record in database 30.

Queue of work 20 is read from right to left (FIFO order) and the data required from database 30 can thus be seen as data items (records) A, B, C, D. (Note, each item of work may represent more than one update and may therefore require more than one record from database 30.)

Apply application 40 reads from queue 20 and requests (via database interface 45) the appropriate data from the Database Management System (DBMS) 70. The DBMS includes a query processor 50 (including a parser) which requests data via bufferpool manager (not shown) from bufferpool 60 (volatile memory). If, as is likely, the data is not found within the bufferpool, then the data must be fetched from the database itself. Because the database may store thousands of records on disk and because the data is unlikely to be stored in a predictable order, system throughput can be severely impacted whilst the required data is retrieved into the bufferpool 60. In this example the queue of work 20 requires records A, B, C and D to be fetched in that order, but the disk stores such records in a completely different order (A, C, D, B). For this reason it is no use for the database to predictively prefetch records (i.e. typically in sequential order) - e.g. after reading A getting C.

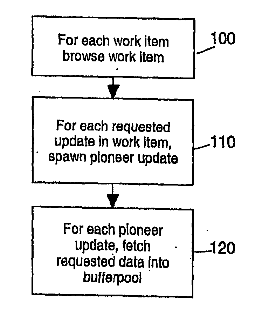

The present invention addresses this problem. Figure 2 illustrates the processing of the present invention in accordance with a preferred embodiment and should be read in conjunction with figure 1.

A main read ahead thread in the apply application 40 browses each item of work from queue 20 (step 100). As previously discussed, each work item comprises at least one update requested of database 30. For each such requested update a pioneer update thread is spawned (step 110). Each pioneer update thread initiates (via the DBMS 50) the fetching of the data required into bufferpool 60 such that the appropriate update can be applied to the database 30 when requested (step 120).

The pioneer update threads do not make changes to the database themselves (they only read the data) and thus these may easily be applied in parallel. This parallelism permits the database to optimize its I/O pattern (in the same way as it would have during parallel execution of the original transactions).

Full implementation of a pioneer call preferably ensures that all relevant data, both for the record and indices, are read into the bufferpool. For example, take an update that sets the salary of person# 1234 to 50000. This will probably involve the person record itself, and the index to the person table on person#. If there is an index on salary, then that is also preferably prefetched.

There are three mechanisms by which the pioneer updates (pretend updates) may be achieved:

Mechanism A: Where the pioneer thread translates an update request into an associated prefetch request which is a query (i.e. a query to fetch the appropriate data rather than to actually perform the update itself) and issues that request to the database. Thus the pioneer call is simulated with a query on person# 1234.

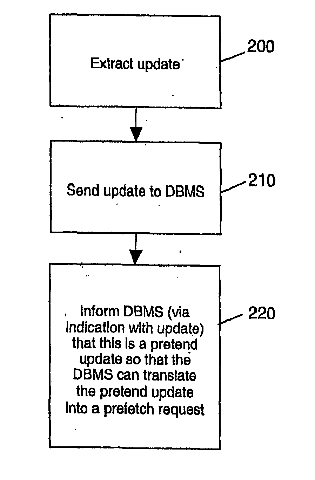

Mechanism B: Where the database interface 45 is extended to permit the pioneer thread to instruct the database that the call is a pioneer call (pretend update request) and not a 'real' update. A pioneer thread extracts an update request from a work item (step 200 of figure 3); sends a the update request to the DBMS (step 210); and informs the DBMS (via an indication with the update request) that this is a pretend update request so that the DBMS can translate the pretend update request into a prefetch request to fetch required data (step 220).

Mechanism C: Where the database interface 45 is further extended so that the calls from the pioneer thread (initiating prefetch requests) and from the master transaction thread (i.e. the thread which subsequently performs the requested updates) are explicitly associated; e.g. by passing a token (identifier) for the update between the calls. Note, mechanism C is preferably an extension of mechanism B.

Mechanism A involves no change to the database. However, it involves more work by the apply application in translating the update into a related query. There is also the possibility that the query will not force the database to read all appropriate data in the bufferpool; in the example the relevant part of index on salary may well not be prefetched. This is because the apply application may not fully understand how the database stores its information or may find it difficult to communicate an appropriate request to the DBMS. These issues are resolved in Mechanism B.

In mechanism B the pretend update request is translated into a prefetch request and used to fetch data that will be required when a corresponding real update is executed. Because the DBMS creates the prefetch request, it is far more likely that all the required data for a particular real update request will be prefetched. The DBMS is aware of the way in which data is stored and is able to translate this effectively into an appropriate prefetch request.

To explain Mechanism C more fully, when a pioneer update request is spawned by the apply application, it is sent to the query processor in order for the query processor to parse the update request into an internal (predetermined) form. This internal form is used to determine what data to retrieve from the database. Once the data has been retrieved this internal form could be discarded. However in doing this, when the master thread wishes to action the real update, the update request will once again have to be parsed.

To save time and processing power, the query processor can save a parsed internal form resulting from a pioneer update request and this can be associated with a token which is passed back to the apply application. When the master transaction thread wishes to action the update request, the same token can be passed by the apply application to the DBMS and this can then be used to determine the appropriate parsed internal form of that request. This improvement removes the need for double parsing.

The query token of Mechanism C is also preferably used by a bufferpool manager (not shown) to determine when a prefetched data item is not longer needed. When the token is passed from the apply application back to the DBMS in order for an update to be applied, the relevant data is retrieved from the bufferpool and then the token is preferably passed to the bufferpool manager to indicate thereto that the data associated with the token may be removed from the bufferpool. Only in such circumstances is data preferably removed from the bufferpool.

This will reduce the risk of prefetched data being removed from the bufferpool even before it is required, or conversely of being held in the bufferpool too long to the detriment of other data.

It should be noted that whereas Mechanism A could be implemented by the apply application with no changes to the database implementation or interface, Mechanisms B and C require changes to the database interface and implementation.

As alluded to above, the main read ahead thread operates ahead of a master transaction thread (also running in apply application 40). The master transaction thread gets each work item in the same way as the read ahead thread did earlier but this time however the item of work is actually removed from the queue in order to actually action a requested update. Because the read ahead (and pioneer threads) has determined ahead of time the data that will be required by the master transaction thread, the necessary data should already have been fetched into the bufferpool 60. Thus the bufferpool manager should be able to retrieve the data requested by the master thread directly from the bufferpool 60 in order that the requested update can be actioned. Since the requested data is immediately available, I/O is not stalled and thus performance is greatly improved. (As previously stated, standard lazy write techniques can be used to actually get the updated data back onto the disk.)

It is important for reasons of performance that the master transaction thread does not get to close or fall too far behind of the main read ahead thread. (If the master thread falls too far behind then the bufferpool may have to be overwritten with new data when the old data has not yet been used; if the master thread gets too close to the read ahead thread then the data may not have been properly prefetched into the bufferpool before it is required.)

It is thus preferable that there is some form of signalling between the main read-ahead thread and the master transaction thread to prevent this from happening.

Preferably therefore the main read ahead thread (and consequently its pioneer threads) is permitted to get no more than a predetermined amount (**requiredReadahead**) ahead of the master transaction thread (e.g. measured in work items processed, updates processed or bytes processed).

Thus the apply application 40 has two counters, **readaheadAmountProcessed** and **masterAmountProcessed.** In the preferred embodiment, the requiredReadahead value is measured in terms of work items processed. Each time a read ahead thread moves to the next work item, readaheadAmountProcessed is incremented. Each time processing of a work item is completed by the master thread, **masterAmountProcessed** is incremented. The main read ahead thread includes a sleep loop which causes any pioneer threads controlled by the read ahead thread to also sleep:

**while (readaheadAmountProcessed-masterAmountProcessed > requiredReadahead) sleep(10)**

In this way, the read ahead thread does not get too far ahead of the main thread. This is important because otherwise there is the danger that the bufferpool 60 will become full thus necessitating the removal of data therefrom which may not have yet been used.

The master thread includes also includes a sleep loop:

**while (readaheadAmountProcessed-masterAmountProcessed < requiredReadahead) sleep(10)**

This ensures that the master thread does not overtake the main read ahead thread.

Note, the completion of read ahead items may not occur in an orderly manner so it is difficult to precisely define how far the read ahead has reached. Thus this signalling could be made more sophisticated to allow for precisely which pioneer updates are completed.

It should be noted that in certain cases updates are dependent on each other in such a manner that execution of the first update changes the data that must be read in order to implement the later update. For example:

[0] At start, Fred is in Department Y.

[1] Move Fred to Department X.

[2] Change the manager of Fred's Department to Bill

The pioneer execution of [1] will read data for Fred into the bufferpool. This data will later be used when the master transaction thread executes [1]. The pioneer execution of [2] may happen before this update, and will therefore read data for Department Y (Fred's old department) into the bufferpool. However, the real execution of [2] will require data for Department X (Fred's new department) to be in the bufferpool.

In these cases the master transaction thread may stall while executing the corresponding real update (i.e. because the required data is not in the bufferpool). This will impair performance slightly but in general performance will nevertheless be much improved over the prior art methods. Note, it will not cause incorrect results (as out of order processing of the transactions themselves would have done).

Improvements/Variations

Some improvements/variations on the basic idea described above will now be discussed.

The embodiment discussed thus far uses a single read ahead thread with a new thread being spawned (created) for each pioneer update and terminated upon completion of its work.

Thread creation/termination is however an expensive process. Thus a thread pool may be used instead. In this embodiment, a pool of pioneer update threads are continually available and when their work is done they return to the pool for use again at a later time.

Another option (which can be used in conjunction with the thread pool) is to have more than one read ahead thread and for the multiple read ahead threads to share the work. In one embodiment a pool of read ahead threads is also used.

The multiple read ahead threads also preferably signal to each other which work items they are responsible for. In this way one read ahead thread does not try to do work already completed (or in the process of being completed) by another read ahead thread - i.e. effort is not unnecessarily duplicated.

A very simple implementation is one in which the first read ahead thread is responsible for work items 1, 4 and 7; a second read ahead thread browses work items 2, 5 and 8; and a third read ahead thread being responsible for work items 3, 6 and 9.

Another improvement on the basic principle is to use batching. The original transactions execute in parallel so their log forces (for backup purposes) may boxcar (parallel batching). This is useful as log forcing is processor intensive and holds up other processing until the force is complete.

The master transaction thread is single threaded (this is important in order to preserve the logical order) and so boxcaring does not apply. Transaction batching may however be used with a commit operation being performed only after a certain amount of processing has taken place (measured in terms of time, #messages, #updates, #bytes). Since each commit operation also causes a force operation to the log, transaction batching enables a larger amount of data to be forced in one go rather than the continual interruption to the master transaction thread of multiple (time consuming) log forces.

Another option is to used paired master transaction threads. With a single master transaction thread, this thread would send a batch of updates to the DBMS for processing and then send a commit (or finalise command) thereto. The master transaction thread would then have to wait whilst the DBMS forced the update to the database disk. While waiting for control to be returned from the master thread (from commit), it is preferable for another thread to be processing another batch of updates - eg log force of each batch is parallelized with processing of the subsequent batch.

## Claims

1. A method for processing a queue of messages (20), each message representing at least one request for an update to a database, the method comprising the steps of: browsing a message; extracting from a browsed message an update request; and sending a pretend update request to a database management system (70) responsible for the database which is to be updated, the pretend update request comprising an indication which indicates that the DBMS (70) should not execute the update but should prefetch data that will be required when a corresponding real update is requested.

2. The method of claim 1 comprising the step of: translating the pretend update request into a prefetch request; and prefetching required data.

3. The method of claim 2 wherein the prefetch request is in a predetermined form, the method further comprising the step of: retaining the predetermined form; associating an identifier with the retained predetermined form in order that the retained predetermined form can be identified and used in subsequent performance of the real update request; and returning the identifier in response to the pretend update request.

4. The method of claim 1, 2 or 3 comprising the step of: initiating a real update request by destructively getting a message comprising the update request, the real update request using prefetched data.

5. The method of claim 4, wherein a master thread performs the step of initiating a real update request and wherein one or more read ahead threads perform the step of browsing a message.

6. A method for pre-processing at a database management system (70) update requests to database controlled by the DBMS (70), the method comprising: receiving an update request at the DBMS (70); receiving an indication at the DBMS (70) indicating that the update request is a pretend update request and consequently that the DBMS (70) should not execute the update but should prefetch data that will be required when a corresponding real update is requested; translating the pretend update request into a prefetch request; and prefetching required data based on the prefetch request.

7. The method of claim 6 wherein the prefetch request is in a predetermined form, the method further comprising the steps of: retaining the predetermined form; associating an identifier with the retained predetermined form in order that the retained predetermined form can be identified and used in subsequent performance of the real update request; and returning the identifier in response to the pretend update request.

8. The method of claim 6 or 7 comprising the step of: receiving a real update request; and using already prefetched data to execute the real update request.

9. Apparatus comprising means adapted to perform in operation the method of any of claims 1 to 8.

10. A computer program comprising program code means adapted to perform the method of any of claims 1 to 8 when said program is run on a computer.

## Patentansprüche

1. Verfahren zum Verarbeiten einer Wartschlange von Nachrichten (20), wobei jede Nachricht mindestens eine Anforderung nach einer Aktualisierung einer Datenbank darstellt, wobei das Verfahren die folgenden Schritte umfasst: Durchsuchen einer Nachricht; Entnehmen einer Aktualisierungsanforderung aus einer durchsuchten Nachricht; und Übertragen einer Aktualisierungsvorgabe-Anforderung an ein Datenbankverwaltungssystem DBMS (70), das für die zu aktualisierende Datenbank zuständig ist, wobei die Aktualisierungsvorgabe-Anforderung eine Meldung umfasst, die anzeigt, dass das DBMS (70) die Aktualisierung nicht ausführen muss, sondern Daten abrufen muss, die benötigt werden, wenn vorab eine entsprechende tatsächliche Aktualisierung angefordert wird.

2. Verfahren nach Anspruch 1, das den folgenden Schritt umfasst:
Umsetzen der Aktualisierungsvorgabe-Anforderung in eine Vorabrufanforderung; und Vorabrufen benötigter Daten.

3. Verfahren nach Anspruch 2, wobei die Vorabrufanforderung in einer festgelegten Form vorliegt, wobei das Verfahren außerdem den folgenden Schritt umfasst: Beibehalten der festgelegten Form; Zuordnen eines Kennzeichners zu der beibehaltenen festgelegten Form, so dass die beibehaltene festgelegte Form identifiziert und in einer nachfolgenden Ausführung der tatsächlichen Aktualisierungsanforderung verwendet werden kann; und Rückübertragen des Kennzeichners auf die Aktualisierungsvorgabe-Anforderung hin.

4. Verfahren nach Anspruch 1, 2 oder 3, das den folgenden Schritt umfasst: Einleiten einer tatsächlichen Aktualisierungsanforderung durch Abrufen und gleichzeitigem Löschen einer Nachricht, die die Aktualisierungsanforderung umfasst, wobei die tatsächliche Aktualisierungsanforderung vorabgerufene Daten verwendet.

5. Verfahren nach Anspruch 4, wobei ein ausführbares Programmhauptsegment (master thread) den Schritt des Einleitens einer tatsächlichen Aktualisierungsanforderung ausführt und wobei ein oder mehrere ausführbare Vorauslese-Programmsegmente (read ahead threads) den Schritt des Durchsuchens einer Nachricht ausführen.

6. Verfahren in einem Datenbankverwaltungssystem (70) zum Vorverarbeiten von Aktualisierungsanforderungen an eine vom DBMS (70) gesteuerte Datenbank, wobei das Verfahren Folgendes umfasst: Empfangen einer Aktualisierungsanforderung im DBMS (70); Empfangen einer Meldung im DMBS (70), die anzeigt, dass die Aktualisierungsanforderung eine Aktualisierungsvorgabe-Anforderung ist und das DBMS (70) die Aktualisierung folglich nicht ausführen muss, sondern Daten abrufen muss, die benötigt werden, wenn eine entsprechende tatsächliche Aktualisierung angefordert wird; Umsetzen der Aktualisierungsvorgabe-Anforderung in eine Vorabrufanforderung; und Vorabrufen von benötigten Daten auf der Grundlage der Vorabrufanforderung.

7. Verfahren nach Anspruch 6, wobei die Vorabrufanforderung in einer festgelegten Form vorliegt, wobei das Verfahren außerdem die folgenden Schritt umfasst: Beibehalten der festgelegten Form; Zuordnen eines Kennzeichners zu der beibehaltenen festgelegten Form, so dass die beibehaltene festgelegte Form **gekennzeichnet** und in einer nachfolgenden Ausführung der tatsächlichen Aktualisierungsanforderung verwendet werden kann; und Rückübertragen des Kennzeichners auf die Aktualisierungsvorgabe-Anforderung hin.

8. Verfahren nach Anspruch 6 oder 7, das den folgenden Schritt umfasst: Empfangen einer tatsächlichen Aktualisierungsanforderung; und Verwenden bereits vorabgerufener Daten zum Ausführen der tatsächlichen Aktualisierungsanforderung.

9. Vorrichtung, die ein Mittel umfasst, das beim Betrieb zum Ausführen des Verfahrens nach irgendeinem der Ansprüche 1 bis 8 geeignet ist.

10. Computerprogramm, das ein Computerprogrammcodemittel umfasst, das zum Ausführen des Verfahrens nach irgendeinem der Ansprüche 1 bis 8 geeignet ist, wenn das Programm in einem Computer ausgeführt wird.

## Revendications

1. Un procédé de traitement d'une file d'attente de messages (20), chaque message représentant au moins une requête pour une mise à jour à une base de données, le procédé comprenant les étapes consistant à : faire naviguer un message ; extraire d'un message ayant navigué une requête de mise à jour ; et envoyer une requête de mise à jour prétendue à un système de gestion de base de données (70) responsable de la base de données qui doit être mise à jour, la requête de mise à jour prétendue comprenant une indication, indiquant que le système DBMS (70) devrait ne pas exécuter la mise à jour mais devrait pré-extraire des données allant être requises lorsqu'une mise à jour réelle correspondante est requise.

2. Le procédé selon la revendication 1, comprenant l'étape consistant à : traduire la requête de mise à jour prétendue en une requête de pré-extraction ; et pré-extraire les données requises.

3. Le procédé selon la revendication 2, dans lequel la requête de pré-extraction se présente sous une forme prédéterminée, le procédé comprenant en outre l'étape consistant à : conserver la forme prédéterminée ; associer un identificateur à la forme prédéterminée conservée, pour que la forme prédéterminée conservée puisse être identifiée et utilisée dans l'accomplissement subséquent de la requête de mise à jour réelle ; et retourner l'identificateur en réponse à la requête de mise à jour prétendue.

4. Le procédé selon la revendication 1, 2 ou 3, comprenant l'étape consistant à : initier une requête de mise à jour réelle, en obtenant de façon destructive un message comprenant la requête de mise à jour, la requête de mise à jour réelle utilisant les données pré-extraites.

5. Le procédé selon la revendication 4, dans lequel un sous-processus maître accomplit l'étape d'initiation d'une requête de mise à jour réelle et, dans lequel un ou plusieurs sous-processus de lecture amont accomplisse(nt) l'étape de navigation d'un message.

6. Un procédé de prétraitement, en un système de gestion de base de données (70), de requêtes de mise à jour sur une base de données contrôlée par le DBMS (70), le procédé comprenant : la réception d'une requête de mise à jour au DBMS (70) ; la réception d'une indication au DBMS (70), indiquant que la requête de mise à jour est une requête de mise à jour prétendue et, consécutivement, que le DBMS (70) ne doit pas exécuter la mise à jour, mais devrait pré-extraire des données qui vont être requises lorsqu'une mise à jour réelle correspondante est requise ; traduire la requête de mise à jour prétendue en une requête de pré-extraction ; et pré-extraire des données requises d'après la requête de pré-extraction.

7. Le procédé selon la revendication 6, dans lequel la requête de pré-extraction se présente sous une forme prédéterminée, le procédé comprenant en outre les étapes consistant à : retenir la forme prédéterminée ; associer un identificateur à la forme prédéterminée retenue, pour que la forme prédéterminée retenue puisse être identifiée et utilisée dans les performances subséquentes de la requête de mise à jour réelle ; et retourner l'identificateur en réponse à la requête de mise à jour prétendue.

8. Le procédé selon la revendication 6 ou 7, comprenant l'étape consistant à : recevoir une requête de mise à jour réelle ; et utiliser des données déjà pré-extraites pour exécuter la requête de mise à jour réelle.

9. Dispositif comprenant des moyens adaptés pour mettre en oeuvre le procédé selon l'une quelconque des revendications 1 à 8.

10. Un programme pour ordinateur, comprenant des moyens de code de programme, adaptés pour mettre en oeuvre le procédé selon l'une quelconque des revendications 1 à 8, lorsque ledit programme fonctionne sur un ordinateur.
